(19) Europäisches Patentamt
European Patent Office
Office européen des brevets

(11) **EP 4 661 191 A2**

(12) **EUROPEAN PATENT APPLICATION**
published in accordance with Art. 153(4) EPC

(43) Date of publication:
**10.12.2025 Bulletin 2025/50**

(21) Application number: **24785065.4**

(22) Date of filing: **19.03.2024**

(51) International Patent Classification (IPC):
*H01M 50/446* (2021.01)  *H01M 50/449* (2021.01)
*H01M 50/411* (2021.01)  *H01M 50/42* (2021.01)
*H01M 50/426* (2021.01)  *H01M 50/431* (2021.01)
*H01M 50/46* (2021.01)  *H01M 10/052* (2010.01)
*H01M 50/457* (2021.01)

(52) Cooperative Patent Classification (CPC):
Y02E 60/10

(86) International application number:
**PCT/KR2024/003389**

(87) International publication number:
**WO 2024/210357 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.04.2023 KR 20230043722**
**19.04.2023 KR 20230051173**

(71) Applicant: **LG Energy Solution, Ltd.**
**Seoul 07335 (KR)**

(72) Inventors:
• **KWON, Su Jee**
**Daejeon 34122 (KR)**
• **LEE, So Yeong**
**Daejeon 34122 (KR)**
• **BAE, Won Sik**
**Daejeon 34122 (KR)**
• **BAK, Byeong Chan**
**Daejeon 34122 (KR)**

(74) Representative: **Hoffmann Eitle**
**Patent- und Rechtsanwälte PartmbB**
**Arabellastraße 30**
**81925 München (DE)**

(54) **SEPARATOR FOR ELECTROCHEMICAL DEVICE AND ELECTROCHEMICAL DEVICE COMPRISING SAME**

(57)    The present disclosure relates to a separator for an electrochemical device and the electrochemical device including the same, and more specifically, to a separator for an electrochemical device and the electrochemical device including the same, in which damage to a porous polymer base can be prevented, and an insulation breakdown voltage can be increased by having an adhesive layer including a hollow particle type polymer binder on a coating layer to perform a buffering action against a pressure applied to a lamination process of electrodes and the separator.

**FIG. 1**

## Description

**[Technical Field]**

The present application claims priority to and the benefits of Korean Patent Application No. 10-2023-0043722, filed with the Korean Intellectual Property Office on April 03, 2023 and No. 10-2023-0051173, filed with the Korean Intellectual Property Office on April 19, 2023, the entire contents of which are incorporated herein by reference. The present disclosure relates to a separator for an electrochemical device and the electrochemical device including the same, and more specifically, to a separator for an electrochemical device and the electrochemical device including the same, in which damage to a porous polymer base can be prevented, and an insulation breakdown voltage can be increased by having an adhesive layer including a hollow particle type polymer binder on a coating layer to perform a buffering action against a pressure applied to a lamination process of electrodes and the separator.

**[Background Art]**

Among components of an electrochemical device, a separator includes a polymer base having a porous structure, which is located between a positive electrode and a negative electrode and serves to isolate the positive electrode and the negative electrode, prevent electrical short between the two electrodes, and allow electrolyte and ions to pass therethrough. The separator itself does not participate in the electrochemical reaction, but physical properties, such as wettability to an electrolyte solution, the degree of porosity, and a thermal contraction rate, affect the performance and safety of the electrochemical device.

Therefore, to reinforce the physical properties of the separator, various methods for adding a coating layer to a porous polymer base and changing the physical properties of the coating layer by adding various materials to the coating layer have been attempted. For example, an inorganic material may be added to the coating layer to increase the mechanical strength of the separator, or an inorganic material or hydrate may be added to the coating layer to improve the flame retardancy and heat resistance of a polymer base.

The separator may be bonded to an electrode through a lamination process, and to secure a bonding strength between the electrode and the separator, a binder resin may be added to a coating layer composition of the separator.

Meanwhile, in the conventional separator used in medium to large-sized batteries such as an electric vehicle (EV) and an energy storage system (ESS), electrodes and a separator are assembled in a lamination and stacking process (L & S), but when a process speed is increased to improve productivity, the time for which heat is applied to the separator is reduced. Therefore, to secure a bonding strength for a short time while heat is applied, the lamination process is being improved to increase a pressure in the heat application process.

However, there is a problem that a great pressure applied in the lamination process causes damage to the porous polymer base, thereby degrading battery performance and reducing the insulation breakdown voltage of the separator. Furthermore, there is a problem that hi-pot defects and low voltage defects are caused.

As a result, there is a need for research on a separator capable of buffering the pressure applied in the lamination process.

**[Summary of Invention]**

**[Technical Problem]**

The present disclosure is directed to providing a separator for an electrochemical device and the electrochemical device including the same, in which damage to the separator can be prevented in a high-pressure lamination process of bonding electrodes and the separator by having an adhesive layer including a hollow particle type polymer binder on a coating layer.

However, the object of the present disclosure is not limited to the above-described object, and other objects that are not mentioned will be able to be clearly understood by those skilled in the art from the following description.

**[Solution to Problem]**

One embodiment of the present disclosure provides a separator for an electrochemical device, including a porous polymer base, a coating layer provided on at least one surface of the porous polymer base and including a first polymer binder and inorganic particles, and an adhesive layer provided on the coating layer and including a hollow particle type second polymer binder.

According to one embodiment of the present disclosure, a density of the second polymer binder may be in the range of 0.7 $g/cm^3$ or more and 0.9 $g/cm^3$ or less.

According to one embodiment of the present disclosure, the second polymer binder may be an acrylic-based binder.

According to one embodiment of the present disclosure, the coating layer may further include the hollow particle type third polymer binder.

According to one embodiment of the present disclosure, a sphericity of the third polymer binder may be 0.6 or more, a density of the third polymer binder may be smaller than 1.0 g/cm$^3$, and a density difference between the third polymer binder and the inorganic particle may be 1.5 g/cm$^3$ or more.

According to one embodiment of the present disclosure, the third polymer binder may be an acrylic-based binder.

According to one embodiment of the present disclosure, the content of the inorganic particle in the coating layer may be 90 parts by weight or more with respect to 100 parts by weight of the coating layer.

According to one embodiment of the present disclosure, when the separator is compressed by applying a pressure of 10 tons at 90°C for 15 seconds, the thickness reduction rate of the porous polymer base defined by Equation 1 below may be 10% or less.

Thickness reduction rate (%)=(thickness of porous polymer base before compression-thickness of porous polymer base after compression)/thickness of porous polymer base before compression X 100     [Equation 1]

According to one embodiment of the present disclosure, when the separator is compressed by applying a pressure of 10 tons at 90°C for 15 seconds, the insulation breakdown voltage of the porous polymer base may be 1000 V or more.

According to one embodiment of the present disclosure, when the separator is compressed by applying a pressure of 10 tons at 90°C for 15 seconds, the air permeability increase rate of the separator defined by Equation 2 below may be 15% or less.

Air permeability increase rate (%)=(air permeability of the separator after compression-air permeability of the separator before compression)/air permeability of the separator before compression X 100     [Equation 2]

According to one embodiment of the present disclosure, the air permeability increase rate may increase as the content of the second polymer binder increases.

According to one embodiment of the present disclosure, when the separator is stored at 180°C for 30 minutes, a shrinkage rate of the separator defined by Equation 3 below may be 10% or less.

Shrinkage rate (%)=(length of separator before storage-length of separator after storage)/length of separator after storage     [Equation 3]

According to one embodiment of the present disclosure, the thickness of the adhesive layer may be 2.0 $\mu$m or less.

One embodiment of the present disclosure provides an electrochemical device including a positive electrode, a negative electrode, and a separator, in which the separator is interposed between the positive electrode and the negative electrode and is the separator for an electrochemical device.

**[Advantageous Effects]**

The separator for an electrochemical device according to one embodiment of the present invention can buffer the pressure applied by the hollow particle type polymer binder included in the adhesive layer in the lamination process.

The separator for an electrochemical device according to one embodiment of the present invention can increase the insulation breakdown voltage by preventing damage to the porous polymer base with the buffering action.

The electrochemical device according to one embodiment of the present invention can improve battery performance.

**[Brief Description of Drawings]**

FIG. 1 is a schematic view of a separator for an electrochemical device according to one embodiment of the present disclosure.

FIG. 2 is a schematic view of the electrochemical device according to one embodiment of the present disclosure.

**[Description of Embodiments]**

In the present specification, when a certain portion is described as "including" a certain element, it means that the certain portion may further include other elements rather than precluding other elements unless specifically stated to the contrary.

In the present specification, the term "A and/or B" means "A and B, or A or B."

In the present specification, when a certain component is described as being provided "on" one component, unless specifically stated to the contrary, it means that other components may be further disposed rather than precluding other components from being disposed therebetween.

In the present specification, the characteristic of having pores means that an object includes a plurality of pores and a gaseous and/or liquid fluid may pass through the pores from one side surface to the other side surface of the object by the structure in which the pores are interconnected.

In the present specification, a separator has porous properties including a large number of pores and serves as a porous ion-conducting barrier that allows ions to pass therethrough while blocking electrical contact between a negative electrode and a positive electrode in the electrochemical device.

Hereinafter, the present disclosure will be described in more detail.

One embodiment of the present disclosure provides a separator for an electrochemical device including a porous polymer base, a coating layer provided on at least one surface of the porous polymer base and including a first polymer binder and an inorganic particle, and an adhesive layer provided on the coating layer and including a hollow particle type second polymer binder.

The separator for an electrochemical device according to one embodiment of the present invention can buffer the pressure applied by the hollow particle type polymer binder included in the adhesive layer in the lamination process. In addition, the separator for an electrochemical device according to one embodiment of the present disclosure can increase an insulation breakdown voltage by preventing damage to the porous polymer base with the buffering action.

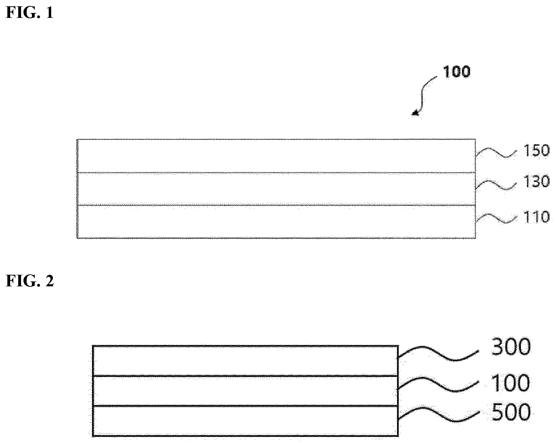

FIG. 1 is a schematic view of a separator for an electrochemical device according to one embodiment of the present disclosure. Referring to FIG. 1, a separator 100 for an electrochemical device according to one embodiment of the present disclosure will be described in detail.

According to one embodiment of the present disclosure, the separator 100 for an electrochemical device may include a porous polymer base 110. As described above, since the separator 100 for an electrochemical device includes the porous polymer base 110, it is possible to allow lithium ions to pass through the porous polymer base while blocking electrical contact and implement a shutdown function at an appropriate temperature.

According to one embodiment of the present disclosure, the porous polymer base 110 may be manufactured using a polyolefin-based resin as a base resin. Examples of the polyolefin-based resin may include polyethylene, polypropylene, polypentene, etc. and include one or more among them. There is advantageous in that the separator having porosity, that is, a large number of pores manufactured using such a polyolefin-based resin as the base resin provides a shutdown function at an appropriate temperature.

According to one embodiment of the present invention, a weight average molecular weight of the polyolefin-based resin may be in the range of 500,000 or more and 1.5 million or less. By adjusting the weight average molecular weight of the polyolefin-based resin within the above-described range, it is possible to increase the compression resistance of the separator. Furthermore, upon using a mixture of different polyolefin-based resins or forming a separator with a multilayered structure made of different polyolefin-based resins, the weight average molecular weight of the polyolefin-based resin may be calculated by adding the weight average molecular weight according to a content ratio of each polyolefin-based resin.

In the present specification, "weight average molecular weight (Mw)" may be measured using gel permeation chromatography (PL GPC220, Agilent Technologies), and measurement conditions may be set as follows.

- Column: PL Olexis (from Polymer Laboratories)
- Solvent: Trichlorobenzene (TCB)
- Flow velocity: 1.0 ml/min
- Sample concentration: 1.0 mg/ml
- Injection amount: 200 $\mu\ell$
- Column temperature: 160°C
- Detector: Agilent high temperature RI detector
- Standard: Polystyrene (calibrated by tertiary function)

According to one embodiment of the present disclosure, the porous polymer base 110 may be manufactured by a method (wet method) of mixing the polyolefin-based resin with diluents at a high temperature to form a single phase, extracting the diluents after phase-separating the polymer material and the diluents to form pores in a cooling process, and then performing stretching and heat setting.

According to one embodiment of the present disclosure, the average pore size and maximum pore size of the porous polymer base of the separator 100 for an electrochemical device can be easily manufactured by those skilled in the art to meet the scope of the present disclosure by adjusting a mixing ratio, stretching ratio, heat setting treatment temperature, etc. of the diluents.

According to one embodiment of the present disclosure, the separator 100 for an electrochemical device may include a coating layer 130 provided on at least one surface of the porous polymer base 110. Specifically, as shown in FIG. 1, the separator 100 for an electrochemical device includes the coating layer 130 formed on one surface of the porous polymer base 110, or the coating layer 130 provided on both surfaces of the porous polymer base 110. As described above, since the separator 100 for an electrochemical device may include the coating layer 130 provided on at least one surface of the porous polymer base 110, it is possible to improve the heat resistance and mechanical properties of the separator and prevent the occurrence of an electrical short of an electrode by shrinking the separator at a high temperature.

According to one embodiment of the present disclosure, the separator 100 for an electrochemical device includes the coating layer 130 including a first polymer binder 131 (not shown) and inorganic particles 133 (not shown). As described above, since the coating layer 130 includes the first polymer binder 131 and the inorganic particles 133, it is possible to improve the heat resistance of the separator, improve mechanical properties, prevent occurring an electrical short of electrodes due to shrink of the separator at high temperatures, and form pores inside the coating layer.

According to one embodiment of the present disclosure, the coating layer 130 may be formed by binding the inorganic particles 133 by the first polymer binder 131 and accumulating the inorganic particles 133 in the coating layer. Pores inside the coating layer 130 may result from an interstitial volume, which is an empty space between the inorganic particles 133.

According to one embodiment of the present disclosure, the coating layer 130 may include a plurality of pores. Specifically, the coating layer may be a porous coating layer. More specifically, the coating layer may be a porous coating layer including a plurality of pores therein. As described above, the coating layer includes the plurality of pores to allow lithium ions to pass through the pores and allow a current to flow therethrough while physically blocking the negative and positive electrodes.

According to one embodiment of the present disclosure, the first polymer binder 131 may be an acrylic-based binder, a polyvinylidene-based binder, or combinations thereof. As described above, by selecting the first polymer binder 131 from the above-described binders, it is possible to increase the heat resistance of the coating layer and increase the bonding strength of the inorganic particles in the coating layer.

According to one embodiment of the present disclosure, the first polymer binder 131 may be the acrylic-based binder. It is possible to maintain the porosity of the separator and increase the bonding strength between the electrode and the separator in the battery lamination process, thereby easily manufacturing the battery and stably implement the stacking process.

According to one embodiment of the present disclosure, the acrylic-based binder may be a polymer containing carboxylic acid ester as a repeating unit and may preferably be (meth)acrylic acid ester or acrylic-styrene copolymer.

According to one embodiment of the present disclosure, the (meth)acrylic acid ester may be methyl(meth) acrylate, ethyl(meth)acrylate, n-propyl(meth)acrylate, i-propyl(meth)acrylate, n-butyl (meth)acrylate, i-butyl(meth)acrylate, n-amyl(meth)acrylate, i-amyl(meth)acrylate, hexyl(meth)acrylate, cyclohexyl(meth)acrylate, 2-ethylhexyl(meth)acrylate, n-octyl(meth)acrylate, nonyl(meth)acrylate, decyl(meth)acrylate, hydroxymethyl(meth)acrylate, hydroxyethyl(meth)acrylate, ethylene glycol(meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, allyl(meth)acrylate, ethylene di(meth)acrylate, etc., and may be one or more selected from these materials. Among them, one or more selected from methyl(meth)acrylate, ethyl(meth)acrylate, and 2-ethylhexyl(meth)acrylate is preferable, and methyl(meth)acrylate is particularly preferable.

According to one embodiment of the present invention, the acrylic-styrene copolymer may include an acrylic-based binder, and the acrylic-based binder may be a polyacrylate-based binder. For example, the binder may be one or more selected from the group consisting of styrene-butadiene rubber, nitrile-butadiene rubber, acrylonitrile-butadiene rubber, acrylonitrile-butadiene-styrene rubber, and acrylate-based polymers and specifically, may be a copolymer containing acrylate.

According to one embodiment of the present disclosure, the polyvinylidene-based binder contained in the first polymer binder 131 may be a polyvinylidene fluoride (PVdF, polyvinylidene difluoride)-based binder. As described above, by selecting the polyvinylidene-based binder as a polyvinylidene fluoride-based binder, it is possible to reduce the resistance of the separator.

According to one embodiment of the present disclosure, the polyvinylidene-based binder contained in the first polymer binder 131 may be a polyvinylidene fluoride (PVdF, polyvinylidene difluoride)-based binder. As described above, by selecting the polyvinylidene-based binder as a polyvinylidene fluoride-based binder, it is possible to reduce the resistance of the separator.

According to one embodiment of the present disclosure, the polyvinylidene-based binder may be a copolymer (PVdF-co-HFP, Poly(vinylidene fluoride-co-hexafluoropropylene)) of polyvinylidene fluoride and hexafluoropropylene. As described above, by selecting the polyvinylidene-based binder as the copolymer of polyvinylidene fluoride and hexafluoropropylene, it is possible to minimize dissolution of the polymer binder by the electrolyte solution.

According to one embodiment of the present disclosure, the polyvinylidene-based binder contained in the first polymer binder 131 may be 10 wt% or more of the content of the hexafluoropropylene. Specifically, the polyvinylidene-based binder included in the first polymer binder 131 may be in the range of 10 wt% or more and 80 wt% or less, 15 wt% or more and 75 wt% or less, 20 wt% or more and 70 wt% or less, 25 wt% or more and 65 wt% or less, 30 wt% or more and 60 wt% or less, 35 wt% or more and 55 wt% or less, or 40 wt% or more and 50 wt% or less of the content of the hexafluoropropylene. By adjusting the content of the hexafluoropropylene included in the polyvinylidene-based binder of the first polymer binder 131 within the above-described range, it is possible to reduce the resistance of the separator. The content of the hexafluoropropylene (HFP) monomer may be measured by $^1$H-NMR and/or $^{19}$F-NMR.

According to one embodiment of the present disclosure, the first polymer binder 131 may be a hybrid binder particle containing an acrylic binder and a polyvinylidene binder. As described above, by selecting the first polymer binder 131 to be a hybrid binder particle containing an acrylic binder and a polyvinylidene binder, it is possible to increase the bonding strength with the electrode.

According to one embodiment of the present disclosure, the first polymer binder 131 may be in a particle or liquid form. By selecting the first polymer binder 131 from the above, it is possible to adjust the porosity and air permeability of the coating layer, adjust the size of the pores of the coating layer, and improve the mechanical properties of the coating layer.

According to one embodiment of the present invention, the content of the first polymer binder 131 may be 10 parts by weight or less with respect to 100 parts by weight of the coating layer. Specifically, the content of the first polymer binder 131 may be more than 0 parts by weight and 10 parts by weight or less, 1 part by weight or more and 9 parts by weight or less, 2 parts by weight or more and 8 parts by weight or less, 3 parts by weight or more and 7 parts by weight or less, or 4 parts by weight or more and 6 parts by weight or less with respect to 100 parts by weight of the coating layer 130. By adjusting the content of the first polymer binder 131 within the above-described range, it is possible to improve the mechanical properties of the coating layer 130, maintain the porosity of the coating layer, and increase heat resistance.

According to one embodiment of the present disclosure, the content of the inorganic particles 133 may be 90 parts by weight or more with respect to 100 parts by weight of the coating layer 130. Specifically, the content of the inorganic particle 133 may be more than 90 parts by weight and 100 parts by weight or less, 91 parts by weight or more and 99 parts by weight or less, 92 parts by weight or more and 98 parts by weight or less, 93 parts by weight or more and 97 parts by weight, or 94 parts by weight or more and 96 parts by weight or less with respect to 100 parts by weight of the coating layer 130. By adjusting the content of the inorganic particles 133 within the above-described range, it is possible to improve the heat resistance and mechanical properties of the separator.

According to one embodiment of the present disclosure, the inorganic particles 133 usable in the coating layer 130 are not particularly limited as long as they are electrochemically stable. That is, the inorganic particles that may be used in one embodiment of the present invention are not particularly limited thereto as long as oxidation and/or reduction reactions do not occur in an operating voltage range (e.g., 0 V to 5 V on a Li/Li+ basis).

According to one embodiment of the present disclosure, non-limiting examples of the inorganic particles 133 may include $BaTiO_3$, $Pb(Zr,Ti)O_3(PZT)$, $Pb_{1-x}La_xZr_{1-y}Ti_yO_3$ (PLZT, $0<x<1$, $0<y<1$), $Pb(Mg_{1/3}Nb_{2/3})O_3$-$PbTiO_3$(PMN-PT), hafnia ($HfO_2$), $SrTiO_3$, $SnO_2$, $CeO_2$, $MgO$, $Mg(OH)_2$, $NiO$, $CaO$, $ZnO$, $ZrO_2$, $SiO_2$, $Y_2O_3$, $Al_2O_3$, $SiC$, $Al(OH)_3$, $TiO_2$, aluminum peroxide, zinc tin hydroxide ($ZnSn(OH)_6$), tin-zinc oxide ($Zn_2SnO_4$, $ZnSnO_3$), antimony trioxide ($Sb_2O_3$), antimony tetroxide ($Sb_2O_4$), antimony pentoxide ($Sb_2O_5$), etc. and may include one or two or more thereof.

According to one embodiment of the present disclosure, an average particle diameter D50 of the inorganic particle 133 is not particularly limited, but is preferably in the range of 0.3 $\mu$m or more and 1 $\mu$m or less to form a coating layer having a uniform thickness and an appropriate porosity. Furthermore, when the average particle diameter D50 is smaller than 0.3 $\mu$m, it is possible to reduce the dispersibility of the inorganic particles in the slurry provided for manufacturing the coating layer and when the average particle diameter D50 exceeds 1 $\mu$m, increase the thickness of the coating layer to be formed.

In the present specification, "particle diameter D50" indicates the particle diameter at a 50% point of the cumulative distribution of particle numbers according to the particle diameter. The particle diameter may be measured using a laser diffraction method. Specifically, the powder to be measured is dispersed in a dispersion medium, and then is introduced into a commercially available laser diffraction particle diameter measuring device (e.g., Microtrac S3500) to measure a difference in diffraction patterns according to particle sizes when the particles pass through the laser beam, and thus the particle diameter is calculated. The particle diameter D50 may be measured by calculating the particle diameter at a point at which the cumulative distribution of particle numbers according to the particle diameter in the measuring device is 50%.

According to one embodiment of the present disclosure, the separator 100 for an electrochemical device includes an adhesive layer 150 provided on the coating layer 130. As described above, since the separator 100 for an electrochemical device includes the adhesive layer 150 provided on the coating layer 130, it is possible to secure the bonding strength between the electrode and the separator in the lamination process of the separator and the electrodes.

According to one embodiment of the present disclosure, the thickness of the coating layer 130 with respect to any one side of the porous polymer base 110 may be 2.0 $\mu$m or less. Specifically, the thickness of the coating layer 130 may be in the range of more than 0 $\mu$m and 2.0 $\mu$m or less, 0.1 $\mu$m or more and 1.9 $\mu$m or less, 0.2 $\mu$m or more and 1.8 $\mu$m or less, 0.3 $\mu$m or more and 1.7 $\mu$m or less, 0.4 $\mu$m or more and 1.6 $\mu$m or less, 0.5 $\mu$m or more and 1.5 $\mu$m or less, 0.6 $\mu$m or more and 1.4 $\mu$m or less, 0.7 $\mu$m or more and 1.3 $\mu$m or less, 0.8 $\mu$m or more and 1.2 $\mu$m or less, or 0.9 $\mu$m or more and 1.1 $\mu$m or less. By adjusting the thickness of the coating layer 130 within the above-described range, it is possible to increase the heat resistance of the separator and increase the energy density of the separator.

According to one embodiment of the present disclosure, the separator includes an adhesive layer including a hollow particle type second polymer binder. Specifically, the second polymer binder may have the shape of a particle and form an empty space inside the particle. The empty space formed inside the particle may be a closed space not linked to the outside or an empty space partially communicating with the outside. As described above, since the adhesive layer contains the hollow particle type second polymer binder, the empty space formed inside the particle can buffer the pressure applied in the lamination process, thereby reducing the pressure applied to the separator and preventing damage to the separator. Furthermore, it is possible to increase an insulation breakdown voltage by preventing damage to the separator. In addition, a portion of the hollow particle type second polymer binder is broken by the pressure applied in the lamination process, and the broken second polymer binder can prevent a reduction in the thickness of the separator while supporting the pressure applied in the lamination process, thereby implementing a low reduction rate of the thickness. Furthermore, the air permeability of the adhesive layer can be increased by the hollowness included in the second polymer binder, thereby improving the air permeability of the separator including the adhesive layer.

According to one embodiment of the present disclosure, a density of the second polymer binder may be 0.7 g/cm$^3$ or more and 0.9 g/cm$^3$ or less. As described above, by adjusting the density of the second polymer binder, it is possible to adjust the size of an internal space, that is, an empty space contained in the hollow particle type and improve the buffering effect against the applied pressure.

According to one embodiment of the present disclosure, the solubility of the second polymer binder in water may be 1 g/L or less. Specifically, the solubility of the second polymer binder in water may be 0.1 g/L or less, 0.01 g/L or less, or 0.001 g/L or less. More specifically, the second polymer binder may be insoluble in water. By adjusting the solubility of the second polymer binder in water within the above-described range, the second polymer binder is not dissolved in the dispersion medium in the slurry for forming the adhesive layer to maintain the hollow particle type in the adhesive layer to reduce an external pressure, thereby preventing damage to the separator.

According to one embodiment of the present disclosure, it is preferable that the particle diameter D50 of the hollow particle type second polymer binder is in the range of 0.3 $\mu$m or more and 1 $\mu$m or less. Furthermore, when the particle diameter D50 is smaller than 0.3 $\mu$m, it is possible to reduce the dispersibility of the second polymer binder in the slurry provided for manufacturing the adhesive layer and when the particle diameter D50 exceeds 1 $\mu$m, increase the thickness of the adhesive layer to be formed.

According to one embodiment of the present disclosure, the second polymer binder may be the acrylic-based binder. It is possible to maintain the porosity of the separator and increase the bonding strength between the electrode and the separator in the battery lamination process, thereby easily manufacturing the battery and stably implement the stacking process.

According to one embodiment of the present disclosure, the acrylic-based binder may be a polymer containing carboxylic acid ester as a repeating unit and may preferably be (meth)acrylic acid ester or acrylic-styrene copolymer.

According to one embodiment of the present disclosure, the (meth)acrylic acid ester may be methyl(meth) acrylate, ethyl(meth)acrylate, n-propyl(meth)acrylate, i-propyl(meth)acrylate, n-butyl (meth)acrylate, i-butyl(meth)acrylate, n-amyl(meth)acrylate, i-amyl(meth)acrylate, hexyl(meth)acrylate, cyclohexyl(meth)acrylate, 2-ethylhexyl(meth)acrylate, n-octyl(meth)acrylate, nonyl(meth)acrylate, decyl(meth)acrylate, hydroxymethyl(meth)acrylate, hydroxyethyl(meth)acrylate, ethylene glycol(meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, allyl(meth)acrylate, ethylene di(meth)acrylate, etc., and may be one or more selected from these materials. Among them, one or more selected from methyl(meth)acrylate, ethyl(meth)acrylate, and 2-ethylhexyl(meth)acrylate is preferable, and methyl(meth)acrylate is particularly preferable.

According to one embodiment of the present invention, the acrylic-styrene copolymer may include an acrylic-based binder, and the acrylic-based binder may be a polyacrylate-based binder. For example, the binder may be one or more selected from the group consisting of styrene-butadiene rubber, nitrile-butadiene rubber, acrylonitrile-butadiene rubber, acrylonitrile-butadiene-styrene rubber, and acrylate-based polymers and specifically, may be a copolymer containing acrylate.

According to one embodiment of the present disclosure, the second polymer binder may be an acrylic-based that is a copolymer of a mixed solution including one selected from the group consisting of acrylamide (AA), ethylene glycol dimethacrylate (EGDMA), methyl methacrylate (MMA) butyl acrylate, and combinations thereof.

According to one embodiment of the present disclosure, the coating layer may further include the hollow particle type third polymer binder. As described above, the coating layer can increase the energy density of the battery by further including the hollow particle type third polymer binder and increase the bonding strength of the separator and the electrodes by adjusting a density difference between the polymer binder particles and the inorganic particles and including hollow type polymer binder particles.

According to one embodiment of the present disclosure, the third polymer binder may be a hollow type. Specifically, the hollow type may include an internal space and include a closed space or an open space communicating with the outside. As described above, by selecting the hollow type third polymer binder to adjust the volume of the space and adjust the density of the third polymer binder, thereby facilitating phase separation from the inorganic particles, and by providing the third polymer binder on the surface of the separator, it is possible to increase the bonding strength with the electrodes. In addition, it is possible to increase the energy density of the battery by implementing a low density of the third polymer binder.

According to one embodiment of the present disclosure, the first polymer binder may be a non-hollow type. Specifically, the first polymer binder may be a particle not including an interval space. As described above, by implementing the non-hollow type first polymer binder, the particle shape can be maintained even when a portion of the first polymer binder is dissolved by the dispersion medium contained in the slurry for a coating layer.

According to one embodiment of the present disclosure, the content of the third polymer binder included in a surface opposite to a surface provided with the porous polymer base of the coating layer may be greater than the content of the inorganic particle. Specifically, the total weight of the third polymer binders included in the surface portion of the coating layer may be greater than the total weight of the inorganic particles included in the surface portion of the coating layer. In the present specification, the surface portion of the coating layer may mean a portion of 50% or less of the thickness of the coating layer from the surface of the coating layer. As described above, by adjusting the content of the third polymer binder provided according to the location of the coating layer, it is possible to increase the bonding strength between the separator and the electrodes.

According to one embodiment of the present disclosure, the total weight of the third polymer binders included in the surface provided with the porous polymer base of the coating layer may be greater than the content of the inorganic particle. Specifically, the total weight of the third polymer binders included in the lower surface portion of the coating layer may be greater than the total weight of the inorganic particles included in the lower surface portion of the coating layer. In the present specification, the lower surface portion of the coating layer may mean a portion of 50% or less of the thickness of the coating layer from the surface of the coating layer in which the coating layer is in contact with the porous polymer base. As described above, by adjusting the content of the third polymer binder provided according to the location of the coating layer, it is possible to increase the bonding strength between the separator and the electrodes.

According to one embodiment of the present disclosure, the weight of the third polymer binder included in the surface opposite to the surface provided with the porous polymer base of the coating layer may be smaller than the weight of the inorganic particle. As described above, by adjusting the weights of the inorganic particles and the third polymer binder provided according to the location of the coating layer, it is possible to increase the bonding strength with the porous polymer base and increase the heat resistance of the separator.

According to one embodiment of the present disclosure, the weights of the inorganic particles included in the surface provided with the porous polymer base of the coating layer may be greater than the weight of the third polymer binder. As described above, by adjusting the weights of the inorganic particles provided according to the location of the coating layer, it is possible to increase the bonding strength with the porous polymer base and increase the heat resistance of the separator.

According to one embodiment of the present disclosure, the sphericity of the third polymer binder may be 0.6 or more.

In the present specification, the term "sphericity" may refer to a ratio of a length of a short axis and a length of a long axis in the length of the long axis that is the longest length and the length of the short axis that is the shortest length among the lengths of points at which a straight line passing through the particle meets the surface of the particle.

In the present specification, the term "the length of the long axis and short axis of the particle" may be lengths obtained by measuring the lengths of the long axis and short axis by magnifying and capturing the particle.

According to one embodiment of the present disclosure, the average particle diameter D50 of the third polymer binder is 0.6 $\mu$m or less. Specifically, the average particle diameter D50 of the third polymer binder may be in the range of 0.10 $\mu$m or more and 0.60 $\mu$m or less, 0.15 $\mu$m or more and 0.55 $\mu$m or less, 0.20 $\mu$m or more and 0.50 $\mu$m or less, 0.25 $\mu$m or more and 0.45 $\mu$m or less, or 0.30 $\mu$m or more and 0.40 $\mu$m or less. By adjusting the average particle diameter D50 of the third polymer binder in the above-described range, the third polymer binder can increase the phase separation rate and phase separation efficiency between the hollow particle type third polymer binder and the inorganic particles in the slurry for a coating layer.

According to one embodiment of the present disclosure, the density of the third polymer binder may be smaller than 1.0 g/cm$^3$. Specifically, the density of the third polymer binder may be 0.1 g/cm$^3$ or more and 0.9 g/cm$^3$ or less, 0.2 g/cm$^3$ or more and 0.8 g/cm$^3$ or less, 0.3 g/cm$^3$ or more and 0.7 g/cm$^3$ or less, or 0.4 g/cm$^3$ or more and 0.6 g/cm$^3$ or less. By adjusting the density of the third polymer binder within the above-described range, the third polymer binder in excess of the inorganic particles may be provided on the surface of the coating layer, thereby achieving the lightness of the battery and increasing energy density.

According to one embodiment of the present disclosure, the density difference between the third polymer binder and the inorganic particles may be 1.5 g/cm$^3$ or more. Specifically, the density difference between the third polymer binder and the inorganic particles is in the range of 1.5 g/cm$^3$ or more and 10.0 g/cm$^3$ or less, 2.0 g/cm$^3$ or more and 9.5 g/cm$^3$ or less, 2.5 g/cm$^3$ or more and 9.0 g/cm$^3$ or less, 3.0 g/cm$^3$ or more and 8.5 g/cm$^3$ or less, 3.5 g/cm$^3$ or more and 8.0 g/cm$^3$ or less, 4.0 g/cm$^3$ or more and 7.5 g/cm$^3$ or less, 4.5 g/cm$^3$ or more and 7.0 g/cm$^3$ or less, 5.0 g/cm$^3$ or more and 6.5 g/cm$^3$ or less, or 5.5 g/cm$^3$ or more and 6.0 g/cm$^3$ or less. By adjusting the density difference between the third polymer binder and the inorganic particles in the above-described range, the third polymer binder can increase the phase separation speed and phase separation efficiency between the third polymer binder and the inorganic particles in the slurry for a coating layer.

According to one embodiment of the present disclosure, the density of the inorganic particle may be 4.0 g/cm$^3$ or less. Specifically, the density of the inorganic particle may be 0.1 g/cm$^3$ or more and 4.0 g/cm$^3$ or less, 0.2 g/cm$^3$ or more and 3.9 g/cm$^3$ or less, 0.3 g/cm$^3$ or more and 3.8 g/cm$^3$ or less, 0.4 g/cm$^3$ or more and 3.7 g/cm$^3$ or less, 0.5 g/cm$^3$ or more and 3.6 g/cm$^3$ or less, 0.6 g/cm$^3$ or more and 3.5 g/cm$^3$ or less, 0.7 g/cm$^3$ or more and 3.4 g/cm$^3$ or less, 0.8 g/cm$^3$ or more and 3.3 g/cm$^3$ or less, 0.9 g/cm$^3$ or more and 3.2 g/cm$^3$ or less, 1.0 g/cm$^3$ and more and 3.1 g/cm$^3$ or less, 1.1 g/cm$^3$ or more and 3.0 g/cm$^3$ or less, 1.2 g/cm$^3$ or more and 2.9 g/cm$^3$ or less, 1.3 g/cm$^3$ or more and 2.8 g/cm$^3$ or less, 1.4 g/cm$^3$ or more and 2.7 g/cm$^3$ or less, 1.5 g/cm$^3$ or more and 2.6 g/cm$^3$ or less, 1.6 g/cm$^3$ or more and 2.5 g/cm$^3$ or less, 1.7 g/cm$^3$ or more and 2.4 g/cm$^3$ or less, 1.8 g/cm$^3$ or more and 2.3 g/cm$^3$ or less, 1.9 g/cm$^3$ or more and 2.2 g/cm$^3$ or less, or 2.0 g/cm$^3$ or more and 2.1 g/cm$^3$ or less. By adjusting the density of the inorganic particle in the above-described range, the inorganic particles in excess of the particles of the third polymer binder may be provided on a surface adjacent to the porous polymer base of the coating layer, thereby achieving the lightness of the battery and increasing energy density.

In the present specification, the term "density" may refer to a mass per volume.

According to one embodiment of the present disclosure, the third polymer binder may be the acrylic-based binder. It is possible to maintain the porosity of the separator and increase the bonding strength between the electrode and the separator in the battery lamination process, thereby easily manufacturing the battery and stably implement the stacking process.

According to one embodiment of the present disclosure, the acrylic-based binder may be a polymer containing carboxylic acid ester as a repeating unit and may preferably be (meth)acrylic acid ester or acrylic-styrene copolymer.

According to one embodiment of the present invention, specific examples of the (meth)acrylic acid ester may include methyl(meth)acrylate, ethyl(meth)acrylate, n-propyl(meth)acrylate, i-propyl(meth)acrylate, n-butyl (meth)acrylate, i-butyl(meth)acrylate, n-amyl(meth)acrylate, i-amyl(meth)acrylate, hexyl(meth)acrylate, cyclohexyl(meth)acrylate, 2-ethylhexyl(meth)acrylate, n-octyl(meth)acrylate, nonyl(meth)acrylate, decyl(meth)acrylate, hydroxymethyl(meth)acrylate, hydroxyethyl(meth)acrylate, ethylene glycol(meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, allyl(meth)acrylate, ethylene di(meth)acrylate, etc., and may be one or more selected from these. Among them, one or more selected from methyl(meth)acrylate, ethyl(meth)acrylate, and 2-ethylhexyl(meth)acrylate is preferable, and methyl(meth)acrylate is particularly preferable.

According to one embodiment of the present invention, the acrylic-styrene copolymer may include an acrylic-based binder, and the acrylic-based binder may be a polyacrylate-based binder. For example, the binder may be one or more selected from the group consisting of styrene-butadiene rubber, nitrile-butadiene rubber, acrylonitrile-butadiene rubber, acrylonitrile-butadiene-styrene rubber, and acrylate-based polymers and specifically, may be a copolymer containing acrylate.

According to one embodiment of the present disclosure, the total content of the first polymer binder and the third polymer binder may be 25 parts by weight or less with respect to 100 parts by weight of the coating layer. Specifically, the total content of the first polymer binder and the third polymer binder may be more than 0 parts by weight and 25 parts by weight or less, 1 part by weight or more and 24 parts by weight or less, 2 parts by weight or more and 23 parts by weight or less, 3 parts by weight or more and 22 parts by weight or less, 4 parts by weight or more and 21 parts by weight or less, 5 parts by weight or more and 20 parts by weight or less, 6 parts by weight or more and 19 parts by weight or less, 7 parts by weight or more and 18 parts by weight or less, 8 parts by weight or more and 17 parts by weight or less, 9 parts by weight or more and 16 parts by weight or less, 10 parts by weight or more and 15 parts by weight or less, 11 parts by weight or more and 14 parts by weight or less, or 12 parts by weight or more and 13 parts by weight or less with respect to 100 parts by weight of the coating layer. By adjusting the total content of the first polymer binder and the third polymer binder within the above-described range, it is possible to increase the ease of assembly in the process of assembling the electrode.

According to one embodiment of the present disclosure, a weight ratio of the first polymer binder and the third polymer binder may be in the range of 9:1 to 1:9. Specifically, the weight ratio of the first polymer binder and the third polymer binder may be in the range of 8:1 to 1:8, 7:1 to 1:7, 6:1 to 1:6, 5:1 to 1:5, 4:1 to 1:4, 3:1 to 1:3, or 2:1 to 1:2. Preferably, the weight ratio of the first polymer binder and the third polymer binder may be 1:1. By adjusting the weight ratio of the first polymer binder and the third polymer binder within the above-described range, it is possible to increase the bonding strength before the electrolyte is injected into the battery and the bonding strength after the electrolyte is injected into the battery.

According to one embodiment of the present disclosure, when the separator is compressed by applying a pressure of 10 tons at 90°C for 15 seconds, the thickness reduction rate of the porous polymer base defined by Equation 1 below may be 10% or less.

Thickness reduction rate (%) = (thickness of porous polymer base before compression-thickness of porous polymer base after compression)/thickness of porous polymer base before compression X 100 [Equation 1]

That is, a portion of the hollow particle type second polymer binder is broken by the pressure applied in the lamination process, and the broken second polymer binder can prevent a reduction in the thickness of the separator while supporting the pressure applied in the lamination process, thereby implementing a low reduction rate of the thickness. Furthermore, the remaining unbroken second polymer binder can prevent the reduction in the thickness of the separator while supporting the pressure applied in the lamination process. Specifically, when the separator is compressed by applying a pressure of 10 tons at 90°C for 15 seconds, the thickness reduction rate of the porous polymer base may be more than 0% and 10% or less, 1% or more and 9% or less, 2% or more and 8% or less, 3% or more and 7% or less, or 4% or more and 6% or less. By adjusting the thickness reduction rate of the porous polymer base within the above-described range, it is possible to increase the insulation breakdown voltage.

In one embodiment of the present disclosure, the thicknesses of the porous polymer base, the coating layer, and/or the adhesive layer may be measured using a contact-type thickness gauge. For example, as the contact-type thickness gauge, VL-50S-B from Mitutoyo may be used.

According to one embodiment of the present disclosure, when the separator is compressed by applying a pressure of 10 tons at 90°C for 15 seconds, the insulation breakdown voltage of the porous polymer base may be 1000 V or more. Specifically, the insulation breakdown voltage of the porous polymer base may be in the range of 1000 V or more and 2000 V or less, 1100 V or more and 1900 V or less, 1200 V or more and 1800 V or less, 1300 V or more and 1700 V or less, or 1400 V or more and 1600 V or less. By adjusting the insulation breakdown voltage within the above-described range, it is possible to improve battery stability and battery performance.

In the present specification, the term "insulation breakdown voltage" may refer to the voltage that is boosted at a rate of 100 V/s using an AC/DC/IR hipot tester device (Chroma, 19052 model) and reaches 0.5 m and 3 s.

According to one embodiment of the present disclosure, when the separator is compressed by applying a pressure of 10 tons at 90°C for 15 seconds, the air permeability increase rate of the separator defined by Equation 2 below may be 15% or less.

Air permeability increase rate (%) = (air permeability of the separator after compression-air permeability of the separator before compression)/air permeability of the separator before compression X 100 [Equation 2]

Specifically, when the separator is compressed by applying a pressure of 10 tons at 90°C for 15 seconds, the air permeability increase rate of the separator is more than 0% and 15% or less, 1% or more and 14% or less, 2% or more and 13% or less, 3% or more and 12% or less, 4% or more and 11% or less, 5% or more and 10% or less, 6% or more and 9% or less, or 7% or more and 8% or less. By adjusting the air permeability increase rate of the separator within the above-described range, it is possible to improve ionic conductivity and battery performance.

According to one embodiment of the present disclosure, the air permeability increase rate may increase as the content of the second polymer binder increases. Specifically, it is possible to increase the air permeability by forming separate pores by the hollow included in the second polymer binder, and as described above, it is possible to improve ion conductivity and battery performance by adjusting air permeability increase rate.

In the present specification, the term "air permeability of the separator" may be measured using EG01-55-1MR equipment from Asahi Seiko.

According to one embodiment of the present disclosure, when the separator is stored at 180°C for 30 minutes, a shrinkage rate of the separator defined by Equation 3 below may be 10% or less.

Shrinkage rate (%)=(length of separator before storage-length of separator after storage)/length of separator after storage

[Equation 3]

Specifically, when the separator is stored at 180°C for 30 minutes, the shrinkage rate of the separator may be in the range of more than 0% and 10% or less, 1% or more and 9% or less, 2% or more and 8% or less, 3% or more and 7% or less, or 4% or more and 6% or less. Furthermore, the shrinkage rate of the separator may indicate the shrinkage rate in each of a machine direction (MD) and a transverse direction (TD). By adjusting the shrinkage rate of the separator within the above-described range, it is possible to increase the heat resistance of the separator and increase battery safety under high temperature conditions.

According to one embodiment of the present disclosure, the thickness of the adhesive layer may be 2.0 $\mu$m or less. Specifically, the thickness of the adhesive layer 150 may be in the range of more than 0 $\mu$m and 2.0 $\mu$m or less, 0.1 $\mu$m or more and 1.9 $\mu$m or less, 0.2 $\mu$m or more and 1.8 $\mu$m or less, 0.3 $\mu$m or more and 1.7 $\mu$m or less, 0.4 $\mu$m or more and 1.6 $\mu$m or less, 0.5 $\mu$m or more and 1.5 $\mu$m or less, 0.6 $\mu$m or more and 1.4 $\mu$m or less, 0.7 $\mu$m or more and 1.3 $\mu$m or less, 0.8 $\mu$m or more and 1.2 $\mu$m or less, or 0.9 $\mu$m or more and 1.1 $\mu$m or less. By adjusting the thickness of the adhesive layer 150 within the above-described range, it is possible to increase the adhesiveness of the separator and the electrodes, increase the energy density of the separator, and improve the buffering effect against an external pressure.

One embodiment of the present disclosure provides a method of manufacturing the separator for an electrochemical device including applying a slurry for a coating layer including the first polymer binder 131 and the inorganic particles 135 on at least one surface of the porous polymer base 110, and applying a slurry for an adhesive layer containing the second polymer binder 151.

The method of manufacturing the electrochemical device according to one embodiment of the present disclosure can easily prevent an increase in resistance of the separator and increase the energy density of the battery by manufacturing the separator formed of a thin film. In the method of manufacturing the separator for an electrochemical device according to one embodiment of the present disclosure, content that overlaps the description of the separator for an electrochemical device will be omitted.

According to one embodiment of the present disclosure, the method of manufacturing the electrochemical device includes applying the slurry for a coating layer containing the first polymer binder 131 and the inorganic particles 135 on at least one surface of the porous polymer base 110. As described above, by including the applying of the slurry for a coating layer on at least one surface of the porous polymer base, the coating layer can be formed with a single application, and the content of inorganic particles is excessive in the slurry for a coating layer, thereby increasing the heat resistance of the separator and easily evaporating the solvent.

According to one embodiment of the present disclosure, the slurry may be provided by manufacturing a polymer solution by dissolving the first polymer binder in an appropriate solvent before the applying of the slurry for a coating layer. The solvent preferably has a solubility index similar to that of the binder polymer to be used and a low boiling point. This is intended to easily perform uniform mixing and then solvent removal. Non-limiting examples of usable solvents include acetone, tetrahydrofuran, methylene chloride, chloroform, dimethylformamide, N-methyl-2-pyrrolidone (NMP), cyclohexane, water, or mixtures thereof.

According to one embodiment of the present disclosure, the slurry may be provided by dispersing the first polymer binder in an appropriate dispersion medium and manufacturing a polymer emulsion before the applying of the slurry for a coating layer. The dispersion medium preferably has a low boiling point. It is intended to easily perform uniform mixing and then solvent removal. Non-limiting examples of usable dispersion medium include acetone, tetrahydrofuran, methylene chloride, chloroform, dimethylformamide, N-methyl-2-pyrrolidone (NMP), cyclohexane, water, or mixtures thereof.

According to one embodiment of the present disclosure, inorganic particles may be added and dispersed to the polymer emulsion or the polymer solution. A content ratio of the inorganic particle and the polymer binder particle is as described above and may be appropriately adjusted in consideration of the thickness, pore size, and porosity of the coating layer according to one embodiment of the present disclosure, which is finally manufactured.

According to one embodiment of the present disclosure, the solid content of the slurry for a coating layer may be in the range of 10 wt% or more and 30 wt% or less. Specifically, the solid content of the slurry for a coating layer may be in the range of 11 wt% or more and 29 wt% or less, 12 wt% or more and 28 wt% or less, 13 wt% or more and 27 wt% or less, 14 wt% or more and 26 wt% or less, 15 wt% or more and 25 wt% or less, 16 wt% or more and 24 wt% or less, 17 wt% or more and 23 wt% or less, 18 wt% or more and 22 wt% or less, or 19 wt% or more and 21 wt% or less. By adjusting the solid content of the slurry for a coating layer within the above-described range, it is possible to prevent an increase in the resistance of the separator and increase the energy density of the battery by manufacturing the separator formed of a thin film.

According to one embodiment of the present disclosure, the method of applying the slurry for a coating layer to the surface of the porous polymer base 110 is not particularly limited to any one method, and typical methods known in the art may be used. For example, various methods such as dip coating, die coating, roll coating, comma coating, and combinations thereof may be used.

According to one embodiment of the present disclosure, the slurry for a coating layer may further include the hollow particle type third polymer binder. As described above, the slurry for a coating layer can increase the energy density of the battery by further including the hollow particle type third polymer binder and increase the bonding strength of the separator and the electrodes by adjusting a density difference between the polymer binder particles and the inorganic particles and including hollow type polymer binder particles.

According to one embodiment of the present disclosure, the method of manufacturing the electrochemical device includes applying the slurry for an adhesive layer containing the second polymer binder 151. As described above, by including the applying of the slurry for an adhesive layer containing the second polymer binder 151, the adhesive layer can be easily formed.

According to one embodiment of the present disclosure, the method of applying the slurry for an adhesive layer to the surface of the porous polymer base 110 is not particularly limited to any one method, and typical methods known in the art may be used. For example, various methods such as dip coating, die coating, roll coating, comma coating, and combinations thereof may be used.

According to one embodiment of the present disclosure, the slurry for an adhesive layer may further include a dispersion medium, and the dispersion medium may be water. As described above, the slurry for an adhesive layer may further include a dispersion medium to uniformly disperse the second polymer binder.

According to one embodiment of the present invention, the method of manufacturing the electrochemical device may include providing the coating layer by drying the slurry for a coating layer. As described above, by including the providing of the coating layer by drying the slurry for a coating layer, it is possible to minimize damage to the coating layer and easily remove the solvent or dispersion medium contained in the slurry.

According to one embodiment of the present disclosure, the method of manufacturing the electrochemical device may include providing the adhesive layer by drying the slurry for an adhesive layer. As described above, by including the providing of the adhesive layer by drying the slurry for an adhesive layer, it is possible to minimize damage to the adhesive layer and easily remove the dispersion medium contained in the slurry.

According to one embodiment of the present disclosure, the method of manufacturing the electrochemical device may include providing each of a coating layer and an adhesive layer by drying the slurry for an adhesive layer after applying and drying the slurry for a coating layer. As described above, by including the providing of each of the coating layer and the adhesive layer by applying and drying the slurry for a coating layer and then drying the slurry for an adhesive layer, it is possible to easily form the coating layer and the adhesive layer.

According to one embodiment of the present invention, the drying process appropriately sets time conditions to minimize the occurrence of surface defects of the coating layer. For the drying, a drying auxiliary device such as a drying oven or hot air may be used within an appropriate range.

According to one embodiment of the present disclosure, the separator is manufactured as an electrode assembly by a lamination process in which the separator is interposed between the negative electrode and the positive electrode and bonded by applying heat and/or a pressure. In one embodiment of the present invention, the lamination process may be performed by a roll press device including a pair of pressure rollers. That is, it is possible to achieve interlayer bonding by sequentially stacking the negative electrode, the separator, and the positive electrode and inserting the negative electrode, the separator, and the positive electrode between the pressure rollers. In this case, the lamination process may be performed by hot pressing.

One embodiment of the present disclosure provides an electrochemical device including a positive electrode 300, a negative electrode 500, and a separator 100, in which the separator 100 is interposed between the positive electrode 300 and the negative electrode 500 and is the separator 100 for an electrochemical device.

The electrochemical device according to one embodiment of the present invention can improve battery performance.

FIG. 2 is a schematic view of the electrochemical device according to one embodiment of the present disclosure. The electrochemical device according to one embodiment of the present disclosure will be described in detail with reference to FIG. 2.

In the present specification, the electrochemical device is a device for converting chemical energy into electrical energy through an electrochemical reaction and is a concept encompassing a primary battery and a secondary battery. In the present specification, the secondary battery is capable of charging and discharging and indicates a lithium secondary battery, a nickel-cadmium battery, a nickel-hydrogen battery, etc. The lithium secondary battery uses lithium ions as an ion conductor and may include, for example, a non-aqueous electrolyte secondary battery containing a liquid electrolyte, an all-solid-state battery containing a solid electrolyte, a lithium polymer battery containing a gel polymer electrolyte, a lithium metal battery using a lithium metal as a negative electrode, etc., but is not limited thereto.

According to one embodiment of the present invention, the positive electrode includes a positive electrode current collector and a positive electrode active material layer including a positive electrode active material, a conductive material, and a binder resin on at least one surface of the current collector. The positive electrode active material may be one or more among a layered compound such as lithium manganese composite oxide ($LiMn_2O_4$, $LiMnO_2$, etc.), lithium

cobalt oxide (LiCoO$_2$), or lithium nickel oxide (LiNiO$_2$), or a compound substituted with one or more transition metals; lithium manganese oxide with Chemical Formula Li$_{1+x}$Mn$_{2-x}$O$_4$ (here, x is in the range of 0 to 0.33), LiMnO$_3$, LiMn$_2$O$_3$, LiMnO$_2$, etc., lithium copper oxide (Li$_2$CuO$_2$), vanadium oxides such as LiV$_3$O$_8$, LiV$_3$O$_4$, V$_2$O$_5$, Cu$_2$V$_2$O$_7$, Ni site type lithium nickel oxide represented by Chemical Formula LiNi$_{1-x}$M$_x$O$_2$ (here, M=Co, Mn, Al, Cu, Fe, Mg, B or Ga and x=0.01 to 0.3), lithium manganese complex oxide represented by Chemical Formula LiMn$_{1-x}$M$_x$O$_2$ (here, M=Co, Ni, Fe, Cr, Zn or Ta, and x=0.01 to 0.1) or Li$_2$Mn$_3$MO$_8$ (here, M=Fe, Co, Ni, Cu or Zn), LiMn$_2$O$_4$ in which a portion of Li in Chemical Formula is replaced with an alkaline earth metal ion; disulfide compounds, and Fe$_2$(MoO$_4$)$_3$.

According to one embodiment of the present invention, the negative electrode includes a negative electrode current collector and a negative electrode active material layer including a negative electrode active material, a conductive material, and a binder resin on at least one surface of the current collector. The negative electrode may include one type or two types or more mixtures selected from lithium metal oxide, carbon such as non-graphitizable carbon, and graphitic carbon, metal composite oxide such as Li$_x$Fe$_2$O$_3$ (0≤x≤1), Li$_x$WO$_2$ (0≤x≤1), Sn$_x$Me$_{1-x}$Me'$_y$O$_z$ (Me: Mn, Fe, Pb, and Ge, Me': Al, B, P, Si, groups 1, 2, and 3 elements and halogen of a periodic table, 0<x≤1, 1≤y≤3, and 1≤z≤8), a lithium metal, a lithium alloy, a silicon-based alloy, a tin-based alloy, metal oxide such as SnO, SnO$_2$, PbO, PbO$_2$, Pb$_2$O$_3$, Pb$_3$O$_4$, Sb$_2$O$_3$, Sb$_2$O$_4$, Sb$_2$O$_5$, GeO, GeO$_2$, Bi$_2$O$_3$, Bi$_2$O$_4$, and Bi$_2$O$_5$, a conductive polymer such as polyacetylene, an Li-Co-Ni-based material, and titanium oxide as a negative electrode active material.

According to one embodiment of the present invention, the conductive material may be any one or a mixture of two or more selected from the group consisting of graphite, carbon black, carbon fiber or metal fiber, metal powder, conductive whisker, conductive metal oxide, activated carbon, and polyphenylene derivative. More specifically, the conductive material may be one or a mixture of two or more selected from the group consisting of natural graphite, artificial graphite, super-p, acetylene black, Ketjen black, channel black, furnace black, lamp black, summer black, denka black, aluminum powder, nickel powder, oxidation zinc, potassium titanate, and titanium oxide.

According to one embodiment of the present invention, the current collector is not particularly limited as long as it has high conductivity without causing chemical changes in the battery, for example, stainless steel, copper, aluminum, nickel, titanium, calcined carbon, or the aluminum or stainless steel surface-treated with carbon, nickel, titanium, silver, etc., may be used.

According to one embodiment of the present disclosure, as the binder resin, a polymer commonly used in electrodes in the art may be used. Non-limiting examples of the binder resin may include polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetatepropionate, cyanoethylpullulan, cyanoethylpolyvinylalcohol, cyanoethylcellulose, cyanoethylsucrose, pullulan, carboxyl methyl cellulose, etc., but are not limited thereto.

In one embodiment of the present disclosure, the positive electrode slurry for manufacturing the positive electrode active material layer may include a dispersant, and the dispersant may be a pyrrolidone-based compound. Specifically, the positive electrode slurry may be N-methylpyrrolidone (ADC-01, LG Chemical).

According to one embodiment of the present invention, the content of the dispersant contained in the positive electrode slurry may be more than 0 parts by weight and 0.5 parts by weight or less with respect to 100 parts by weight of the positive electrode slurry. Specifically, the content of the dispersant contained in the positive electrode slurry may be more than 0.05 parts by weight and 0.4 parts by weight or less with respect to 100 parts by weight of the positive electrode slurry.

According to one embodiment of the present disclosure, the positive electrode slurry for manufacturing the positive electrode active material layer may include a dispersant, and the dispersant may be a pyrrolidone-based compound. Specifically, the dispersant may be polyvinylpyrrolidone (Junsei, Japan).

According to one embodiment of the present disclosure, the content of the dispersant contained in the negative electrode slurry may be more than 0 parts by weight and 0.5 parts by weight or less with respect to 100 parts by weight of the negative electrode slurry. Specifically, the content of the dispersant contained in the negative electrode slurry may be more than 0.05 parts by weight and 0.4 parts by weight or less with respect to 100 parts by weight of the negative electrode slurry.

According to one embodiment of the present disclosure, the electrochemical device may further include an electrolyte solution.

According to one embodiment of the present invention, a battery may be manufactured by inserting the electrochemical device provided as described above into an appropriate case and injecting an electrolyte solution.

According to one embodiment of the present disclosure, the electrolyte solution is a salt of the same structure as A$^+$B$^-$, in which A$^+$ includes an ion consisting of an alkali metal cation such as Li$^+$, Na$^+$, K$^+$ or combinations thereof, and B$^-$ includes salts containing anions consisting of PF$_6^-$, BF$_4^-$, Cl$^-$, Br$^-$, I$^-$, ClO$_4^-$, AsF$_6^-$, CH$_3$CO$_2^-$, CF$_3$SO$_3^-$, N(CF$_3$SO$_2$)$_2^-$, C(CF$_2$SO$_2$)$_3^-$ or combinations thereof are dissolved or dissociated in an organic solvent consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma butyrolactone (γ-butyrolactone), or mixtures thereof, but is not limited thereto.

One embodiment of the present invention provides a battery module including a battery including the electrochemical element as a unit cell, a battery pack including the battery module, and a device including the battery pack as a power source. Specific examples of the device include a power tool moved by power supplied by an omni-electric motor, electric vehicles including an electric vehicle (EV), a hybrid electric vehicle (HEV), a plug-in hybrid electric vehicle (PHEV), etc., an electric two-wheeled vehicle including an electric bicycle (E-bike) and an electric scooter (E-scooter), an electric golf cart, a power storage systems, etc., but are not limited thereto.

**[Mode for invention]**

Hereinafter, in order to specifically describe the present disclosure, the present disclosure will be described in detail through examples. However, the examples according to the present disclosure may be modified into various other forms, and the scope of the present disclosure should not be construed as being limited to the examples to be described below. The examples in the specification are provided to more completely describe the present disclosure to those skilled in the art.

**<Example 1>**

A polyethylene resin (weight average molecular weight: 900,000) was extruded, and a porous polymer base (total thickness of about 9 $\mu$m) was manufactured by a wet method.

$Al_2O_3$ powder having the particle diameter D50 of 600 nm was prepared as an inorganic particle. An acrylic-based emulsion (CSB-130, Toyo Ink) was prepared as the first polymer binder, and sodium carboxymethyl cellulose (CMC-Na) (SG-L02, GL Chem) was prepared as a dispersant.

The slurry for a coating layer was manufactured by adding the prepared inorganic particles, first polymer binder, and dispersant to water at a weight ratio of 97:2:1 and then adding, crushing, and dispersing the inorganic particles.

A coating layer having the thickness of 1.5 $\mu$m was formed by coating both surfaces of the porous polymer base with the slurry for a coating layer and drying the same.

To manufacture the second polymer binder, the mixed solution was manufactured by dissolving 6.0 mM of acrylamide (AA), 24 Mm of ethylene glycol dimethacrylate (EGDMA), and 10 mg of azobisisobutyronitrile (AIBN) in 50 mL of acetonitrile. Carboxyl-capping polystyrene beads were added to the mixed solution and stirred at 700 rpm. Thereafter, the mixed solution was reacted at 43°C for 12 hours and then at 60°C for 24 hours. Next, the hollow particle type binder, which is the acrylic-based binder, was manufactured by performing aging at 85°C for 6 hours, then performing centrifugation, and washing the separated solid material with alcohol and dissolving potassium persulfate using THF.

The slurry for an adhesive layer was manufactured by adding the second polymer binder (average particle diameter: 500 nm and average density: 0.8 g/cm$^3$) to water and dispersing the mixture so that the content of the solid becomes 20 wt%.

A separator for an electrochemical device was manufactured by applying the slurry for an adhesive layer on the coating layer with bar coating, then drying the same, and forming an adhesive layer having the thickness of 1 $\mu$m.

**<Comparative Example 1>**

A polyethylene resin (weight average molecular weight: 900,000) was extruded, and a porous polymer base (total thickness of about 9 $\mu$m) was manufactured by a wet method.

$Al_2O_3$ powder having the particle diameter D50 of 600 nm was prepared as an inorganic particle. Prepare an acrylic emulsion (CSB-130, Toyo Ink) as the first polymer binder, the hollow particle type binder manufactured in Example 1 as the second polymer binder, and sodium carboxymethyl cellulose (CMC-Na) (SG-L02, GL Chem Co., Ltd.) as the dispersant.

The prepared inorganic particles and dispersant were added to water at a weight ratio of 97:1 and crushed and mixed by ball milling for 2 hours. Thereafter, the slurry for a coating layer in which the content of the solid is 25 wt% was manufactured by adding the first polymer binder and the second polymer binder at a weight ratio of 2:10 and then mixing the mixture.

The separator for an electrochemical device was manufactured by coating both surfaces of the porous polymer base with the slurry for a coating layer and drying the same to form a coating layer having the thickness of 2.5 $\mu$m.

**<Comparative Example 2>**

A separator for an electrochemical device was manufactured in the same manner as Example 1, except that filled particles rather than hollow particles were used as the second polymer binder.

**<Comparative Example 3>**

A separator for an electrochemical device was manufactured in the same manner as that of Example 1, except that in Example 1, a copolymer (PVdF-HFP) (Solvay, solef21510) of polyvinylidene fluoride and hexafluoropropylene dissolved in water, which is not the hollow particle type, was used as the second polymer binder and in Example 1 and the coating layer was manufactured by applying the slurry for an adhesive layer on the coating layer and then separating the same under humidification in Example 1.

**<Comparative Example 4>**

A separator for an electrochemical device was manufactured in the same manner as that of Example 1, except that the average density of the second polymer binder is 0.6 g/cm$^3$ in Example 1.

**<Comparative Example 5>**

A separator for an electrochemical device was manufactured in the same manner as that of Example 1, except that the average density of the second polymer binder is 1.0 g/cm$^3$ in Example 1.

**<Experimental Example 1: measurement for thickness reduction rate of porous polymer base>**

After the thickness of the porous polymer base before and after applying a pressure of 10 tons at 90°C for 15 seconds to the separators of Example 1 and Comparative Examples 1 to 3 was measured using a contact thickness gauge (Mitutoyo, VL-50S-B), the thickness reduction rate of the porous polymer base was calculated using Equation 1 below.

Thickness reduction rate (%) = (thickness of porous polymer base before compression-thickness of porous polymer base after compression)/thickness of porous polymer base before compression X 100     [Equation 1]

**<Experimental Example 2: measurement for insulation breakdown voltage of porous polymer base>**

After applying a pressure of 10 tons at 90°C for 15 seconds to the separators of Example 1 and Comparative Examples 1 to 3, the insulation breakdown voltage of the porous polymer base was measured. The measurement method measured a voltage boosting at a rate of 100 V/s and reaching 0.5 m and 3 s using an AC/DC/IR hipot tester device (Chroma, 19052 model).

**<Experimental Example 3: measurement for air permeability increase rate of separator>**

For the separators of Example 1 and Comparative Examples 1 to 3, the air permeability of the separator before and after applying a pressure of 10 tons to the separator at 90°C for 15 seconds was measured using Asahi Seiko's EG01-55-1MR equipment and calculated using Equation 2 below.

 Air permeability increase rate (%) = (air permeability of the separator after compression-air permeability of the separator before compression)/air permeability of the separator before compression X 100     [Equation 2]

**<Experimental Example 4: measurement for shrinkage rate of separator>**

A shrinkage rate of the separator was calculated using Equation 3 below by providing a test sample by cutting the separators of Example 1 and Comparative Examples 1 to 3 into a size of 50 mm (length) x 50 mm (width), maintaining the test sample in an oven heated at 180°C for 30 minutes, then recovering the test sample, and measuring a length changed with respect to the machine direction (MD) and the transverse direction (TD).

Shrinkage rate (%)=(length of separator before storage-length of separator after storage)/length of separator after storage     [Equation 3]

**<Experimental Example 5: measurement for dry bonding strength>**

A slurry for a negative electrode active material layer having the concentration of 50 wt% of the remaining component excluding water was provided by mixing graphite (natural graphite and artificial graphite blend), a conductive material (carbon black), a dispersant (Polyvinylpyrrolidone, Junsei, Japan), and a binder resin (PVDF-HFP and PVDF blend) with water at a weight ratio of 97.5:0.7:0.14:1.66. Next, the negative electrode having the negative electrode active material layer (thickness of 120 $\mu$m) was manufactured by applying the slurry to the surface of a copper thin film (thickness of 10 $\mu$m) and drying the same.

A sample was produced by cutting the separators of Example 1 and Comparative Examples 1 to 3 into 70 mm (length) x 20 mm (width) and laminating the provided negative electrode and separator using a press at 60°C and 6.5 MPa for 1 sec. The provided samples were fixedly attached to a glass plate using a double-sided tape, and in this case, the negative electrode was disposed to face the glass plate. The separator portion of the sample was peeled off at an angle of 180° at a rate of 150 mm/min at 25°C, and strengths at this time were measured.

[Table 1]

|  | Thickness reduction rate (%) | Insulation breakdown voltage (V) | Air permeability increase rate (%) | Shrinkage rate (MD/TD) (%) | Dry bonding strength (gf/20mm) |
|---|---|---|---|---|---|
| Example 1 | 6.7 | 1,550 | 12 | 2/ 3 | 50 |
| Compara tive Example 1 | 5.0 | 1,780 | 38 | 20/ 34 | 48 |
| Compara tive Example 2 | 13.4 | 890 | 21 | 3/ 3 | 57 |
| Compara tive Example 3 | 13.8 | 900 | 18 | 2/ 3 | 48 |
| Compara tive Example 4 | 13.7 | 1,000 | 13 | 4/ 5 | 51 |
| Compara tive Example 5 | 4.7 | 1,950 | 17 | 1/ 2 | 49 |

Referring to Table 1, it was confirmed that in Example 1 that is one embodiment of the present disclosure, by providing the adhesive layer including the hollow particle type polymer binder on the coating layer, the thickness reduction rate of the porous polymer base was 10% or less, the insulation breakdown voltage of the porous polymer base was 1,550 V, the air permeability increase rate of the separator was 15% or less, and the shrinkage rate of the separator was 10% or less.

In contrast, in Comparative Example 1 including only a coating layer and an excessive amount of binder in the coating layer, the shrinkage rate of the separator rapidly increased, and the air permeability increase rate of the separator rapidly increased. Furthermore, in Comparative Example 2 provided with an adhesive layer containing a particle type polymer binder without a hollow, it was confirmed that the thickness reduction rate of the porous polymer base and the air permeability increase rate of the separator increased, and the insulation breakdown voltage of the porous polymer base decreased. In addition, in Comparative Example 3 including the adhesive layer containing a solution type binder rather than a particle type, it was confirmed that the thickness reduction rate of the porous polymer base and the air permeability increase rate of the separator increased, and the insulation breakdown voltage of the porous polymer base decreased.

**<Reference Example 1>**

A porous polymer base (total thickness: about 9 $\mu$m and porosity: 40% by volume) was manufactured using a wet method by extruding polyethylene resin (weight average molecular weight: 900,000).

A slurry (concentration of the solid: 20 wt%) for a coating layer was provided by adding a copolymer of PVdF and HFP having 5 wt% of the degree of substitution (weight ratio at which HFP is contained in the PVdF-based polymer), which is a polyvinylidene-based binder, as the first polymer binder particle having the particle diameter D50 of 500 nm, styrene-butyl acrylate (glass transition temperature: 40°C, sphericity: 0.95, and density: 0.5 g/cm$^3$), which is a hollow type acrylic-based binder, as the third polymer binder particle having the particle diameter D50 of 300 nm, and an inorganic particle ($Al_2O_3$ and particle diameter D50: 500 nm) to water and dispersing the mixture. The weight ratio of the first polymer binder and the third polymer binder was 1:1. Furthermore, the weight ratio of the polymer binder (the first polymer binder and the third polymer binder) and the inorganic particles was 20:80.

A separator having the total thickness of 15 $\mu$m was manufactured by applying the slurry for a coating layer on both surfaces of the porous polymer base by the bar coating method using the doctor blade, drying the same with the wind at 50°C using a heat gun to form a coating layer having the thickness of 3 $\mu$m on each of both surfaces. Thereafter, a bonding strength was measured according to Experimental Example 5 and is summarized in Table 2 below.

**<Reference Example 2>**

A separator was manufactured in the same manner as that of Reference Example 1, except that the particle diameter D50 of the third polymer binder particle was 700 nm in Reference Example 1. Thereafter, a bonding strength was measured according to Experimental Example 5 and is summarized in Table 2 below.

**<Reference Example 3>**

A separator was manufactured in the same manner as that of Reference Example 1, except that the sphericity of the third polymer binder particle was 0.55 in Reference Example 1. Thereafter, a bonding strength was measured according to Experimental Example 5 and is summarized in Table 2 below.

**<Reference Example 4>**

A separator was manufactured in the same manner as that of Reference Example 1, except that the third polymer binder particle was not a hollow type, a density was 1.0 g/cm$^3$, and a sphericity was 0.98 in Reference Example 1. Thereafter, a bonding strength was measured according to Experimental Example 5 and is summarized in Table 2 below.

**<Reference Example 5>**

A separator was manufactured in the same manner as that of Example 1, except that the first polymer binder particle was not a hollow type, a density was 1.0 g/cm$^3$, a sphericity was 0.98, and a particle diameter D50 was 700 nm in Example 1. Thereafter, a bonding strength was measured according to Experimental Example 5 and is summarized in Table 2 below.

[Table 2]

|  | Dry bonding strength (gf/20 mm) |
| --- | --- |
| Reference Example 1 | 40 |
| Reference Example 2 | 14 |
| Reference Example 3 | 10 |
| Reference Example 4 | 12 |
| Reference Example 5 | 11 |

Referring to Table 1, it was confirmed that the bonding strength between the negative electrode and the separator was excellent in Reference Example 1 according to one embodiment of the present disclosure.

In contrast, in Reference Example 2, since the particle diameter of the third polymer binder increased, phase separation was not easily achieved in the slurry for a coating layer, and thus the bonding strength between the negative electrode and the separator was reduced.

Furthermore, in Reference Example 3, since the sphericity of the third polymer binder was reduced, phase separation is not easy due to the surface resistance with the dispersion medium in the slurry for a coating layer, causing a reduction in the bonding strength between the negative electrode and the separator.

In addition, in Reference Example 4, by selecting the third polymer binder, which is a non-hollow particle rather than a hollow particle, the density difference between the inorganic material and water as the dispersion medium was not large due to an increase in density, and thus phase separation is not easily achieved in the slurry for a coating layer, causing a reduction in the bonding strength between the negative electrode and the separator.

In addition, in Reference Example 5, by selecting the third polymer binder, which is a non-hollow particle rather than a hollow particle, and increasing the particle diameter of the third polymer binder, the density difference between the inorganic material and water as the dispersion medium was not large due to an increase in density, and thus phase separation is not easily achieved in the slurry for a coating layer due to an increase in resistance in the dispersant medium according to an increase in the particle diameter, causing a reduction in the bonding strength between the negative electrode and the separator.

As a result, the separator for an electrochemical device according to one embodiment of the present disclosure can prevent damage to the separator by including the hollow particle type polymer binder in the adhesive layer to buffer the pressure applied in the lamination process.

[DESCRIPTION OF REFERENCE NUMERALS]

100: separator for an electrochemical device
110: porous polymer base
130: coating layer
131: first polymer binder
133: inorganic particle
150: adhesive layer
151: second polymer binder
300: positive electrode
500: negative electrode

## Claims

1. A separator for an electrochemical device, comprising:

   a porous polymer base;
   a coating layer provided on at least one surface of the porous polymer base and including a first polymer binder and inorganic particles; and
   an adhesive layer provided on the coating layer and including a hollow particle type second polymer binder.

2. The separator for an electrochemical device of claim 1, wherein a density of the second polymer binder is in the range of 0.7 $g/cm^3$ or more and 0.9 $g/cm^3$ or less.

3. The separator for an electrochemical device of claim 1, wherein the second polymer binder is an acrylic-based binder.

4. The separator for an electrochemical device of claim 1, wherein the content of the inorganic particle in the coating layer is 90 parts by weight or more with respect to 100 parts by weight of the coating layer.

5. The separator for an electrochemical device of claim 1, wherein the coating layer further includes a hollow particle type third polymer binder.

6. The separator for an electrochemical device of claim 5, wherein a sphericity of the third polymer binder is 0.6 or more,

   a density of the third polymer binder is smaller than 1.0 $g/cm^3$, and
   a density difference between the third polymer binder and the inorganic particle is 1.5 $g/cm^3$ or more.

7. The separator for an electrochemical device of claim 5, wherein the third polymer binder is an acrylic-based binder.

8. The separator for an electrochemical device of claim 1, wherein, when the separator is compressed by applying a pressure of 10 tons at 90°C for 15 seconds,
   a thickness reduction rate of the porous polymer base defined in Equation 1 below is 10% or less:

   thickness reduction rate (%)=(thickness of porous polymer base before compression-thickness of porous polymer base after compression)/thickness of porous polymer base before compression X 100.　　　[Equation 1]

9. The separator for an electrochemical device of claim 1, wherein, when the separator is compressed by applying a pressure of 10 tons at 90°C for 15 seconds,
   an insulation breakdown voltage of the porous polymer base is 1,000 V or more.

10. The separator for an electrochemical device of claim 1, wherein, when the separator is compressed by applying a pressure of 10 tons at 90°C for 15 seconds,

an air permeation increase rate of the separator defined in Equation 2 below is 15% or less:

air permeability increase rate (%)=(air permeability of separator after compression-air permeability of separator before compression)/air permeability of the separator before compression X 100.　　[Equation 2]

11.　The separator for an electrochemical device of claim 10, wherein the air permeability increase rate increases as the content of the second polymer binder increases.

12.　The separator for an electrochemical device of claim 1, wherein, when the separator is stored at 180°C for 30 minutes, a shrinkage rate of the separator defined in Equation 3 below is 10% or less:

shrinkage rate (%)=(length of separator before storage-length of separator after storage)/length of separator after storage.　　[Equation 3]

13.　The separator for an electrochemical device of claim 1, wherein the thickness of the adhesive layer is 3.0 μm or less.

14.　An electrochemical device comprising:

　　a positive electrode; a negative electrode; and a separator,
　　wherein the separator is interposed between the positive electrode and the negative electrode, and is the separator for an electrochemical device of any one of claims 1 to 13.

**FIG. 1**

100

150

130

110

**FIG. 2**

300

100

500

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230043722
- KR 1020230051173